# FASCICULE DE BREVET EUROPEEN

(11) **EP 4 413 315 B1**
(45) Date de publication et mention de la délivrance du brevet: **28.01.2026**
(21) Numéro de dépôt: 22799931.5
(22) Date de dépôt: 05.10.2022
(51) Int. Cl.: F28D 9/00, F28F 9/02, F28D 21/00

(54) **MODULE DE TRAITEMENT THERMIQUE POUR SYSTEME DE TRAITEMENT THERMIQUE D'UN VEHICULE**
WÄRMEBEHANDLUNGSMODUL FÜR EIN FAHRZEUGWÄRMEBEHANDLUNGSSYSTEM
HEAT-TREATMENT MODULE FOR A VEHICLE HEAT-TREATMENT SYSTEM

(30) Priorité: 06.10.2021 FR 2110592
(43) Date de publication de la demande: 14.08.2024
(73) Titulaire: VALEO SYSTEMES THERMIQUES, 78320 Le Mesnil-Saint-Denis (FR)
(72) Inventeur: DENOUAL, Christophe, 78322 Le Mesnil-Saint-Denis Cedex (FR); TISON, Frederic, 78322 Le Mesnil-Saint-Denis Cedex (FR)
(74) Mandataire: Valeo Powertrain Systems
(86) Numéro de dépôt international: PCT/EP2022/077726
(87) Numéro de publication internationale: WO 2023/057524

(56) Documents cités:
- EP-A1- 3 540 352
- EP-A2- 2 629 032
- US-A1- 2012 216 562
- US-B2- 8 899 062

## Description

Le domaine de la présente invention est celui des modules de traitement thermique pour un système de traitement thermique d'un véhicule électrique ou hybride. Elle a pour objet un tel module de traitement thermique. Elle a aussi pour objet un dispositif de traitement thermique comprenant un tel module de traitement thermique et un organe de détente. Elle a encore pour objet un système de traitement thermique comprenant un tel dispositif de traitement thermique.

Les véhicules électriques ou hybrides sont équipés d'un moteur électrique pour pourvoir à leur déplacement. Le moteur électrique est alimenté en énergie électrique par un dispositif de stockage électrique, tel qu'une batterie, qui tend à s'échauffer au cours de son fonctionnement. Pour pérenniser le fonctionnement du dispositif de stockage électrique, il est souhaitable de le refroidir. A cet effet, le véhicule électrique ou hybride est équipé d'un système de traitement thermique qui comprend un circuit de liquide caloporteur à l'intérieur duquel circule un liquide caloporteur et un circuit de fluide réfrigérant à l'intérieur duquel circule un fluide réfrigérant. Le système de traitement thermique comprend un échangeur thermique qui est agencé pour permettre un échange de chaleur entre le fluide réfrigérant présent à l'intérieur de l'échangeur thermique et le liquide caloporteur présent à l'intérieur de l'échangeur thermique. Le circuit de liquide caloporteur comprend également une pompe et un échangeur de chaleur agencé pour échanger des calories avec le dispositif de stockage électrique. Le circuit de fluide réfrigérant comprend également un compresseur, un condenseur, au moins un organe de détente et un évaporateur.

Un tel système de traitement thermique s'avère encombrant et nécessite de nombreuses canalisations pour relier les éléments du système de traitement thermique entre eux, et notamment les éléments constitutifs du circuit de fluide réfrigérant. Ces canalisations sont susceptibles de générer des fuites de liquide caloporteur hors du circuit de liquide caloporteur et/ou des fuites de fluide réfrigérant hors du circuit de fluide réfrigérant. De plus, ces canalisations sont le siège de dissipations thermiques qui affectent un rendement global du système de traitement thermique. Enfin, ces canalisations engendrent des temps d'assemblage des éléments du circuit de liquide caloporteur et du circuit de fluide réfrigérant entre eux qui sont trop longs. Un module de traitement thermique selon le préambule de la revendication 1 est connu du document EP 3 540 352 A1.

La présente invention s'inscrit dans ce contexte et propose un module de traitement thermique pour système de traitement thermique d'un véhicule, tel qu'un véhicule électrique ou hybride. Le module de traitement thermique comprend un échangeur thermique et un échangeur de chaleur interne. L'échangeur thermique est configuré pour opérer un échange de chaleur entre un liquide caloporteur et un fluide réfrigérant. L'échangeur de chaleur interne est configuré pour opérer un échange de chaleur entre le fluide réfrigérant soumis dans le système de traitement thermique à deux niveaux de température différents.

Selon la présente invention, le module de traitement thermique comprend un bloc de fixation au moins solidaire de l'échangeur thermique et agencé pour porter un organe de détente, l'échangeur thermique étant intercalé entre l'échangeur de chaleur interne et le bloc de fixation.

Le module de traitement thermique comprend avantageusement l'une quelconque au moins des caractéristiques techniques suivantes, prises seule ou en combinaison :
- le module de traitement thermique est un module unitaire de traitement thermique formant un ensemble monobloc comprenant l'échangeur de chaleur interne, l'échangeur thermique et le bloc de fixation, qui ne sont dissociables les uns des autres qu'à partir d'une détérioration, voire d'une destruction d'au moins l'un d'entre eux. Le module de traitement thermique forme donc un ensemble qui est d'un seul tenant,
- le bloc de fixation est un bloc globalement parallélépipédique et le bloc de fixation comporte au moins une chambre et au moins deux canaux, dont un premier canal qui s'étend entre un premier orifice d'entrée et un premier orifice de sortie qui s'ouvre sur la chambre, et un deuxième canal qui s'étend entre un deuxième orifice d'entrée qui s'ouvre sur la chambre et un deuxième orifice de sortie,
- le premier orifice d'entrée et le deuxième orifice de sortie sont ménagés sur une première face du bloc de fixation qui est en contact avec une plaque d'extrémité de l'échangeur thermique,
- la première face est brasée sur la plaque d'extrémité de l'échangeur thermique,
- la chambre débouche sur une deuxième face du bloc de fixation, opposée à la première face du bloc de fixation,
- la deuxième face est parallèle à la première face,
- la deuxième face est équipée de moyens de fixation de l'organe de détente,
- les moyens de fixation sont des moyens de fixation par vissage ou analogue,
- l'échangeur thermique comprend un moyen d'amenée du fluide réfrigérant qui s'étend entre la plaque d'extrémité de l'échangeur thermique et une plaque de séparation interposée entre l'échangeur thermique et l'échangeur de chaleur interne, le moyen d'amenée forme un by-pass de l'échangeur thermique pour canaliser directement une circulation du fluide réfrigérant à haute pression circulant à l'intérieur de l'échangeur de chaleur interne vers le bloc de fixation, en minimisant les échanges thermiques entre le fluide réfrigérant circulant à l'intérieur du moyen d'amenée et le liquide caloporteur et/ou le fluide réfrigérant circulant à l'intérieur de l'échangeur thermique,
- le moyen d'amenée comprend une bouche d'entrée en correspondance fluidique avec un premier chemin de circulation du fluide réfrigérant à une première température que comporte l'échangeur de chaleur interne et une bouche de sortie en correspondance fluidique avec le premier orifice d'entrée du bloc de fixation. Le premier chemin de circulation canalise une circulation du fluide réfrigérant à haute pression,
- l'échangeur thermique comprend une première passe, qui est configurée pour être parcourue par le fluide réfrigérant et qui s'étend entre un premier orifice d'admission en communication fluidique avec le deuxième orifice de sortie du bloc de fixation et un premier orifice d'évacuation ménagée à travers la plaque de séparation, et une deuxième passe, qui est configurée pour être parcourue par le liquide caloporteur et qui s'étend entre une bouche d'admission de liquide caloporteur à l'intérieur de l'échangeur thermique et une bouche d'évacuation de liquide caloporteur hors de l'échangeur thermique,
- l'échangeur de chaleur interne comprend un deuxième chemin de circulation du fluide réfrigérant à une deuxième température qui est configuré pour permettre l'échange de chaleur avec le premier chemin de circulation du fluide réfrigérant à une première température et qui s'étend entre un deuxième orifice d'admission en communication fluidique avec le premier orifice d'évacuation et une bouche d'évacuation de fluide réfrigérant hors de l'échangeur de chaleur interne, le premier chemin de circulation s'étendant entre une bouche d'admission de fluide réfrigérant et un deuxième orifice d'évacuation en communication fluidique avec la bouche d'entrée du moyen d'amenée,
- le premier chemin de circulation et le deuxième chemin de circulation sont agencés en U, à l'intérieur d'un plan de circulation qui est parallèle à un plan de plaque dans lequel s'étendent indifféremment la plaque d'extrémité de l'échangeur thermique, une joue d'extrémité de l'échangeur de chaleur interne et la plaque de séparation,
- le premier chemin de circulation et le deuxième chemin de circulation sont agencés en X, à l'intérieur du dit plan de circulation,
- la première passe et la deuxième passe sont agencés en U, à l'intérieur du dit plan de circulation,
- la première passe et la deuxième passe sont agencés en X, à l'intérieur du dit plan de circulation,
- le module de traitement thermique comprend une pluralité de plaques, dont la plaque d'extrémité de l'échangeur thermique et une joue d'extrémité de l'échangeur interne, qui est pourvue de la bouche d'admission de fluide réfrigérant et de la bouche d'évacuation de fluide réfrigérant, entre lesquelles sont interposées la plaque de séparation et des plaques d'échangeur qui sont empilées les unes sur les autres, chaque plaque étant agencée en une cuvette délimitée par un rebord périphérique relevé qui borde un fond, le fond des plaques d'échangeur et de la plaque de séparation comportant une pluralité de collerettes délimitant au moins partiellement un passage de liquide caloporteur ou de fluide caloporteur, les bords périphériques relevés de deux plaques successives étant brasés les uns aux autres,
- le fond des plaques d'échangeur de l'échangeur thermique est pourvu d'au moins une rainure pour conformer en U les passes que loge l'échangeur thermique,
- le fond des plaques d'échangeur de l'échangeur thermique est pourvu d'une pluralité de perturbateurs d'écoulement, pour perturber un écoulement laminaire du fluide réfrigérant et/ou du liquide caloporteur, afin d'optimiser un échange de chaleur entre ces derniers,
- le moyen d'amenée est formé par un empilement de collerettes d'amenée qui sont issues de matière des plaques d'échangeur constitutives de l'échangeur thermique,
- deux collerettes d'amenée successives de l'empilement de collerettes d'amenée sont brasées l'une à autre pour former le moyen d'amenée,
- le moyen d'amenée comprend un tube qui traverse successivement les plaques d'échangeur constitutives de l'échangeur thermique,
- le tube est logé à l'intérieur d'un collecteur de l'échangeur thermique, ce collecteur est indifféremment un collecteur à l'intérieur duquel circule le fluide réfrigérant ou le liquide caloporteur,
- le tube comporte une surface externe qui est brasée à la plaque de séparation et à la plaque d'extrémité de l'échangeur thermique.

La présente invention a aussi pour objet un dispositif de traitement thermique comprenant un tel module de traitement thermique et un organe de détente rapporté sur le bloc de fixation par l'intermédiaire des moyens de fixation.

De préférence, la chambre loge au moins partiellement un embout de l'organe de détente comportant une bouche d'arrivée de fluide réfrigérant à haute pression qui est en communication avec la chambre du bloc de fixation, l'embout comportant une bouche de départ de fluide réfrigérant à basse pression en communication fluidique avec le deuxième orifice d'entrée du bloc de fixation.

La présente invention a aussi pour objet un système de traitement thermique d'un véhicule comprenant un tel dispositif de traitement thermique, le système de traitement thermique comprenant un circuit de liquide caloporteur à l'intérieur duquel circule le liquide caloporteur, le circuit de liquide caloporteur comportant au moins une pompe et un échangeur de chaleur agencé pour échanger des calories avec un dispositif de stockage d'énergie électrique, le système de traitement thermique comprenant un circuit de fluide réfrigérant à l'intérieur duquel circule le fluide réfrigérant, le circuit de fluide réfrigérant comportant au moins un compresseur, un condenseur, un dispositif de détente et un évaporateur.

La présente invention a aussi pour objet un procédé de réalisation d'un tel module unitaire de traitement thermique, le procédé comprenant au moins une étape d'emboutissage d'un feuillard métallique pour former les plaques et ménager au moins le rebord périphérique, les collerettes, la rainure et les perturbateurs d'écoulement.

Le procédé comprend avantageusement une étape unique de brasage des plaques constitutives de l'échangeur thermique, de l'échangeur de chaleur et du bloc de fixation, cette étape de brasage étant suivie d'une étape de fixation de l'organe de détente sur le bloc de fixation.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une illustration schématique d'un système de traitement thermique selon la présente invention,
[fig 2] est une illustration schématique d'un module de traitement thermique et d'un organe de détente selon la présente invention qui sont constitutifs du système de traitement thermique représenté sur la figure 1,
[fig 3] est une illustration schématique d'un dispositif de traitement thermique comprenant le module de traitement thermique et l'organe de détente illustrés sur la figure 2,
[fig 4] est une vue schématique en coupe d'un bloc de fixation et d'un organe de détente constitutifs du dispositif de traitement thermique représenté sur la figure 3,
[fig 5] est une illustration schématique du dispositif de traitement thermique selon un premier mode de réalisation d'un échangeur thermique constitutif du dispositif de traitement thermique représenté sur la figure 3,
[fig 6] est une illustration schématique du dispositif de traitement thermique selon un deuxième mode de réalisation de l'échangeur thermique constitutif du dispositif de traitement thermique représenté sur la figure 3,
[fig 7] est une vue en perspective du dispositif de traitement thermique représenté sur les figures 3, 5 et 6,
[fig 8] est une vue de face d'une plaque de séparation constitutive du dispositif de traitement thermique représenté sur les figures 3 et 5 à 7,
[fig 9] est une vue de face d'une plaque d'échangeur de chaleur interne de premier type constitutive du dispositif de traitement thermique représenté sur les figures 3 et 5 à 7,
[fig 10] est une vue de face d'une plaque d'échangeur de chaleur interne de deuxième type constitutive du dispositif de traitement thermique représenté sur les figures 3 et 5 à 7,
[fig 11] est une vue de face d'une plaque d'échangeur thermique de premier type constitutive du dispositif de traitement thermique représenté sur les figures 3 et 5 à 7,
[fig 12] est une vue de face d'une plaque d'échangeur thermique de deuxième type constitutive du dispositif de traitement thermique représenté sur les figures 3 et 5 à 7,
[fig 13] est une vue de face d'une plaque d'échangeur thermique de troisième type constitutive du dispositif de traitement thermique représenté sur les figures 3 et 5 à 7,
[fig 14] est une vue de face d'une plaque d'échangeur thermique de troisième type constitutive du dispositif de traitement thermique représenté sur les figures 3 et 5 à 7,
[fig 15] est une vue en perspective éclatée du dispositif de traitement thermique représenté sur les figures 3 et 5 à 7.

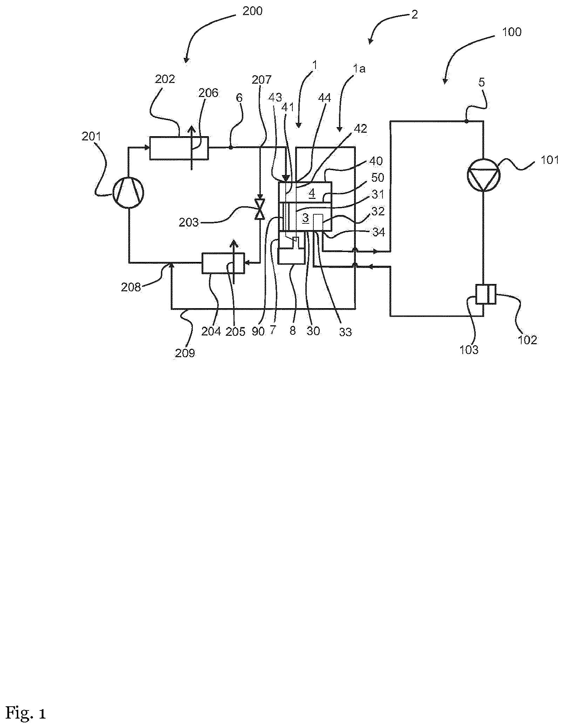

Sur la figure 1, un véhicule électrique ou hybride est équipé d'un système de traitement thermique 2 pour refroidir un dispositif de stockage électrique 102 apte à alimenter en énergie électrique un moteur électrique du véhicule électrique ou hybride. Le moteur électrique est à même de permettre une mise en mouvement du véhicule électrique ou hybride. Le système de traitement thermique 2 est également prévu pour refroidir un flux d'air interne 205 préalablement à une délivrance du flux d'air interne 205 à l'intérieur d'un habitacle du véhicule électrique ou hybride.

Pour ce faire, le système de traitement thermique 2 comprend un circuit de liquide caloporteur 100 à l'intérieur duquel circule un liquide caloporteur 5, tel que de l'eau glycolée ou analogue. Le système de traitement thermique 2 comprend aussi un circuit de fluide réfrigérant 200 à l'intérieur duquel circule un fluide réfrigérant 6, tel que du R134a, du R1234yf, du R744 ou analogue.

Le circuit de liquide caloporteur 100 comprend une pompe 101 pour faire circuler le liquide caloporteur 5 à l'intérieur du circuit de liquide caloporteur 100. Le circuit de liquide caloporteur 100 comprend également un échangeur de chaleur 103 qui est agencé pour permettre au liquide caloporteur 5 présent à l'intérieur de l'échangeur de chaleur 103 d'échanger des calories avec le dispositif de stockage électrique 102. Le circuit de liquide caloporteur 100 comprend aussi un échangeur thermique 3 qui est agencé pour permettre un transfert de calories entre le liquide caloporteur 5 présent à l'intérieur de l'échangeur thermique 3 et le fluide réfrigérant 6 également présent à l'intérieur de l'échangeur thermique 3. A cet effet, l'échangeur thermique 3 comprend une première passe 31, qui est configurée pour être parcourue par le fluide réfrigérant 6, et une deuxième passe 32, qui est configurée pour être parcourue par le liquide caloporteur 5. La première passe 31 et la deuxième passe 32 sont agencées entre elles pour opérer un échange de chaleur entre le fluide réfrigérant 6 présent à l'intérieur de la première passe 31 et le liquide caloporteur 5 présent à l'intérieur de la deuxième passe 32. La deuxième passe 32 s'étend entre une bouche d'admission de liquide caloporteur 33 à l'intérieur de l'échangeur thermique 3 et une bouche d'évacuation de liquide caloporteur 34 hors de l'échangeur thermique 3. La bouche d'admission de liquide caloporteur 33 et la bouche d'évacuation de liquide caloporteur 34 équipent une plaque d'extrémité 30 de l'échangeur thermique 3.

A l'intérieur du circuit de liquide caloporteur 100, le liquide caloporteur 5 circule depuis la pompe 101 vers l'échangeur de chaleur 103 pour capter des calories au dispositif de stockage électrique 102, puis pénètre à l'intérieur de l'échangeur thermique 3 par l'intermédiaire de la bouche d'admission de liquide caloporteur 33, puis circule à l'intérieur de la deuxième passe 32 de l'échangeur thermique 3 pour céder des calories au fluide réfrigérant 6 présent à l'intérieur de la première passe 31, puis atteint la bouche d'évacuation de liquide caloporteur 34 hors de l'échangeur thermique 3, puis le fluide caloporteur 5 retourne vers la pompe 101.

Le circuit de fluide réfrigérant 200 comprend un compresseur 201 pour comprimer le fluide réfrigérant 5 à une haute pression, un condenseur 202 pour permettre au fluide réfrigérant 5 présent à l'intérieur du condenseur 202 de céder à pression constante des calories à un flux d'air externe 206 traversant le condenseur 202, un dispositif de détente 203 à l'intérieur duquel le fluide réfrigérant 5 subit une détente en passant de la haute pression à une basse pression, et un évaporateur 204 agencé pour refroidir le flux d'air interne 205.

Le circuit de fluide réfrigérant 200 comprend aussi une branche de dérivation 209, qui s'étend entre un point de divergence 207 disposé entre une sortie du condenseur 202 et une entrée du dispositif de détente 203, et un point de convergence 208, positionné entre une sortie de l'évaporateur 204 et une entrée du compresseur 201. La branche de dérivation 209 comprend un échangeur de chaleur interne 4, l'échangeur thermique 3, un organe de détente 8 et un bloc de fixation 7 de l'organe de détente 8 sur la plaque d'extrémité 30 de l'échangeur thermique 3.

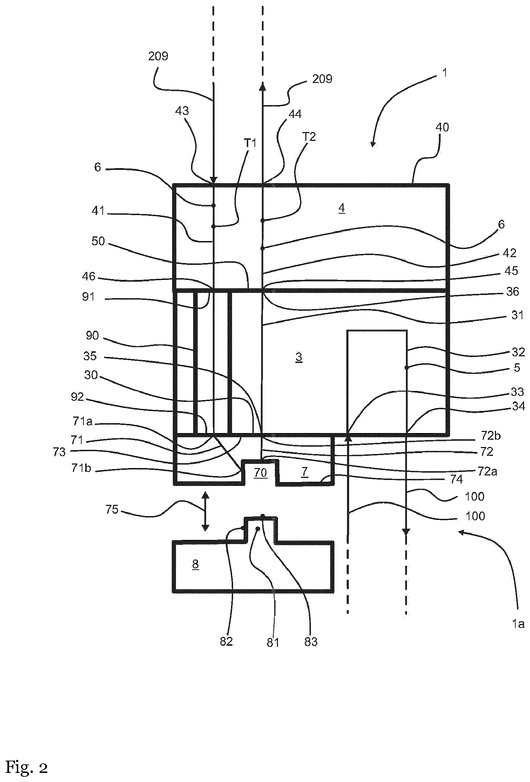

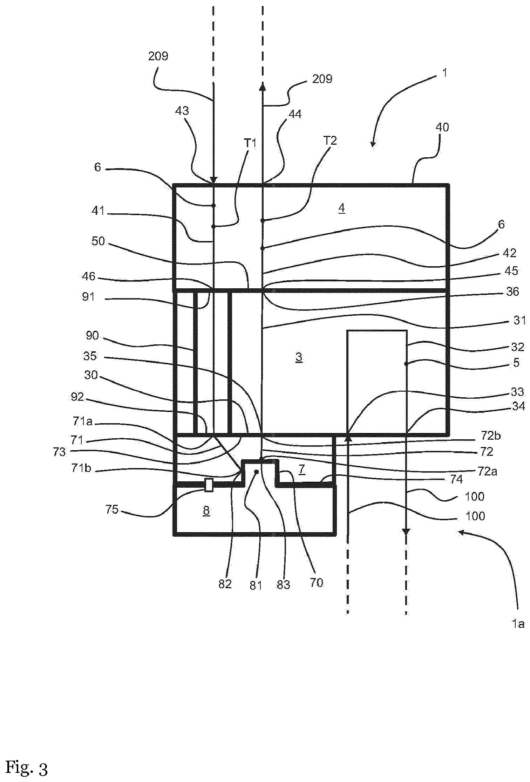

En se reportant également sur les figures 2 et 3, il est proposé par la présente invention un module de traitement thermique 1, qui est unitaire et qui associe en un seul ensemble indissociable l'échangeur de chaleur interne 4, l'échangeur thermique 3 et le bloc de fixation 7. On comprend par le caractère unitaire du module de traitement thermique 1 que l'échangeur de chaleur interne 4, l'échangeur thermique 3 et le bloc de fixation 7 ne sont séparables pas les uns des autres sans altérer, voire détruire, au moins l'un de l'échangeur de chaleur interne 4, de l'échangeur thermique 3 et du bloc de fixation 7. Autrement dit, l'échangeur de chaleur interne 4, l'échangeur thermique 3 et le bloc de fixation 7 constituent un ensemble monobloc. Autrement dit encore, il existe une continuité matérielle entre l'échangeur de chaleur interne 4 et l'échangeur thermique 3 d'une part, et entre l'échangeur thermique 3 et le bloc de fixation 7 d'autre part.

Il est aussi proposé par la présente invention un dispositif de traitement thermique 1a qui comprend le module de traitement thermique 1 et l'organe de détente 8 qui est rapporté sur le bloc de fixation 7 par l'intermédiaire de moyens de fixation 75, tels que des moyens de fixation par vissage, par emboitement ou analogue.

Sur la figure 2, sont représentés le module de traitement thermique 1 et l'organe de détente 8 préalablement à leur assemblage pour former le dispositif de traitement thermique 1a, illustré sur la figure 3. On note à ce stade de la description que les figures 1 à 3 représentent schématiquement le module de traitement thermique 1 et le dispositif de traitement thermique 1a pour illustrer leur fonctionnement.

On comprend que le module de traitement thermique 1 et le dispositif de traitement thermique 1a ainsi formés offrent une compacité optimisée au système de traitement thermique 2, minimisent le nombre de canalisations présentes entre les éléments constitutifs du système de traitement thermique 2, diminuent les dissipations thermiques et réduisent un temps d'assemblage des éléments entre eux.

Dans le module de traitement thermique 1, l'échangeur thermique 3 est interposé entre l'échangeur de chaleur interne 4 et le bloc de fixation 7. Dans le dispositif de traitement thermique 1a, le bloc de fixation 7 est interposé entre l'échangeur thermique 3 et l'organe de détente 8. L'échangeur de chaleur interne 4 s'étend entre une joue d'extrémité 40 de l'échangeur de chaleur interne 4 et une plaque de séparation 50 qui délimite l'échangeur de chaleur interne 4 et l'échangeur thermique 3. La joue d'extrémité 40 est pourvue d'une bouche d'admission de fluide réfrigérant 43 à l'intérieur de l'échangeur de chaleur interne 4 et d'une bouche d'évacuation de fluide réfrigérant 44 hors de l'échangeur de chaleur interne 4. L''échangeur thermique 3 s'étend quant à lui entre la plaque de séparation 50 et la plaque d'extrémité 30.

L'échangeur de chaleur interne 4 est configuré pour opérer un échange de chaleur entre le fluide réfrigérant 6 soumis dans le système de traitement thermique 2, et plus particulièrement dans le circuit de fluide réfrigérant 200, à deux niveaux de température différents T1, T2, dont une première température T1 et une deuxième température T2 inférieure à la première température T1. A cet effet, l'échangeur de chaleur interne 4 comprend un premier chemin de circulation 41 du fluide réfrigérant 6 à la première température T1 et un deuxième chemin de circulation 42 du fluide réfrigérant 6 à la deuxième température T2. Le deuxième chemin de circulation 42 est agencé pour permettre un échange de chaleur entre le fluide réfrigérant 6 présent à l'intérieur du deuxième chemin de circulation 42 et le fluide réfrigérant 6 présent à l'intérieur du premier chemin de circulation 41. La bouche d'admission de fluide réfrigérant 43 à l'intérieur de l'échangeur de chaleur interne 4 permet une admission du fluide réfrigérant 6 à haute pression à l'intérieur du premier chemin de circulation 41 et la bouche d'évacuation de fluide réfrigérant 44 permet une évacuation du fluide réfrigérant 6 à basse pression hors du deuxième chemin de circulation 42.

A l'intérieur de l'organe de détente 8, et à l'instar du dispositif de détente 203, le fluide réfrigérant 6 subit une détente et passe de la haute pression à la basse pression. De préférence, l'organe de détente 8 est une valve d'expansion. Dans sa généralité, l'organe de détente 8 comporte un embout 81 qui est muni d'une bouche d'arrivée 82 de fluide réfrigérant 6 à haute pression et d'une bouche de départ 83 de fluide réfrigérant 6 à basse pression. On comprend que l'organe de détente 8 est apte à faire subir au fluide réfrigérant 6 une détente entre la bouche d'arrivée 82 de fluide réfrigérant 6 à haute pression et la bouche de départ 83 de fluide réfrigérant 6 à basse pression.

Le bloc de fixation 7 est globalement constitué d'un bloc parallélépipédique qui a deux fonctions, une première fonction consistant à faire transiter le fluide réfrigérant à son travers et une deuxième fonction consistant à porter l'organe de détente 8, en logeant au moins l'embout 81 de ce dernier. A ces effets, le bloc de fixation 7 comporte une chambre 70 destinée à recevoir au moins partiellement l'embout 81 de l'organe de détente 8. Le bloc de fixation 7 comporte aussi deux canaux 71, 72, dont un premier canal 71 qui s'étend entre un premier orifice d'arrivée 71a et un premier orifice de sortie 71b qui débouche dans la chambre 70, et un deuxième canal 72 qui s'étend entre un deuxième orifice d'entrée 72a qui s'ouvre sur la chambre 70 et un deuxième orifice de sortie 72b.

Pour faire circuler le fluide réfrigérant 6 à haute pression depuis le premier chemin de circulation 41 vers l'organe de détente 8 afin d'y subir la détente de la haute pression vers la basse pression, l'échangeur thermique 3 loge un moyen d'amenée 90 du fluide réfrigérant 6 qui s'étend entre la plaque de séparation 50 et la plaque d'extrémité 30 de l'échangeur thermique. Plus particulièrement, le moyen d'amenée 90 est apte à faire transiter le fluide réfrigérant 6 à haute pression depuis le premier chemin de circulation 41 vers le premier orifice d'arrivée 71a du bloc de fixation 7. Autrement dit, le moyen d'amenée 90 forme un by-pass de l'échangeur thermique 3 pour faire circuler le fluide réfrigérant 6 à haute pression directement depuis le premier chemin de circulation 41 vers le premier orifice d'arrivée 71a du bloc de fixation 7. A cet effet, le moyen d'amenée 90 comprend une bouche d'entrée 91 en correspondance fluidique avec le premier chemin de circulation 41 du fluide réfrigérant 6 et une bouche de sortie 92 en correspondance fluidique avec le premier orifice d'entrée 71a du bloc de fixation 7.

Le fluide réfrigérant 6 à haute pression circule à l'intérieur du premier canal 71, atteint le premier orifice de sortie 71b et débouche dans la chambre 70. Le fluide réfrigérant 6 à haute pression pénètre à l'intérieur de l'organe de détente 8 par l'intermédiaire de la bouche d'arrivée 82 de fluide réfrigérant 6 à haute pression. Puis, le fluide réfrigérant 6 subit une détente à l'intérieur de l'organe de détente 8. Puis, le fluide réfrigérant 6 à basse pression quitte l'organe de détente 8 par l'intermédiaire de la bouche de départ 83 de fluide réfrigérant 6 à basse pression. La bouche de départ 83 est en communication fluidique avec le deuxième orifice d'entrée 72a, de telle sorte que le fluide réfrigérant 6 s'écoule ensuite à l'intérieur du deuxième canal 72 jusqu'au deuxième orifice de sortie 72b.

La première passe 31 de l'échangeur thermique 3 s'étend entre un premier orifice d'admission 35 qui est en communication fluidique avec le deuxième orifice de sortie 72b du bloc de fixation 7 et un premier orifice d'évacuation 36 ménagée à travers la plaque de séparation 50. Ces dispositions sont telles que le fluide réfrigérant 6 à basse pression provenant de l'organe de détente 8 par l'intermédiaire du bloc de fixation 7 est à même de circuler à l'intérieur de la première passe 31 pour y refroidir le liquide caloporteur 5 présent à l'intérieur de la deuxième passe 32.

Le deuxième chemin de circulation 42 s'étend entre un deuxième orifice d'admission 45, qui est en communication fluidique avec le premier orifice d'évacuation 36 de l'échangeur thermique 3, et la bouche d'évacuation de fluide réfrigérant 44 hors de l'échangeur de chaleur interne 4, de telle sorte que le fluide réfrigérant 6 à l'intérieur du deuxième chemin de circulation 42 échange des calories avec le fluide réfrigérant 6 présent à l'intérieur du premier chemin de circulation 41 qui s'étend entre la bouche d'admission de fluide réfrigérant 43 et un deuxième orifice d'évacuation 46. On note que la plaque de séparation 50 comprend d'une part le deuxième orifice d'évacuation 46 et la bouche d'entrée 91 du moyen d'amenée qui sont en communication fluidique, et d'autre part le premier orifice d'évacuation 36 de l'échangeur thermique 3 et le deuxième orifice d'admission 45 de l'échangeur de chaleur interne 4 qui sont également en communication fluidique.

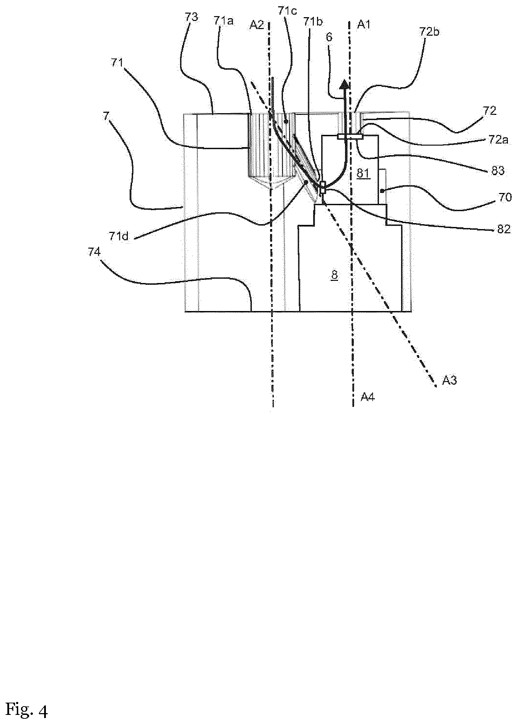

Selon l'invention, dans le bloc de fixation 7 comme illustré sur la figure 4, la chambre 70 et le deuxième canal 72 sont coaxiaux et s'étendent selon un même premier axe d'extension A1. Le premier canal 71 comprend une première portion 71c du premier canal 71 qui est pourvu du premier orifice d'arrivée 71a et une deuxième portion 71d du premier canal 71 qui est pourvue du premier orifice de sortie 71b. La première portion 71c du premier canal 71 s'étend le long d'un deuxième axe d'extension A2, distinct du premier axe d'extension A1 et parallèle au premier axe d'extension A1. La deuxième portion 71d du premier canal 71 s'étend selon un troisième axe d'extension A3 qui est sécant avec le premier axe d'extension A1 et avec le deuxième axe d'extension A2.

On comprend que le fluide réfrigérant 6 pénètre à l'intérieur du bloc de fixation 7 par l'intermédiaire du premier orifice d'arrivée 71a, s'écoule à l'intérieur de la première portion 71c du premier canal 71, puis emprunte la deuxième portion 71d du premier canal 71 pour traverser finalement le premier orifice de sortie 71b et atteindre la chambre 70. Puis, le fluide réfrigérant 6 pénètre à l'intérieur de l'organe de détente 8 par l'intermédiaire de la bouche d'arrivée 82 de fluide réfrigérant 6 à haute pression, puis le fluide réfrigérant 6 subit la détente à l'intérieur de l'organe de détente 8. Puis, le fluide réfrigérant 6 à basse pression quitte l'organe de détente 8 par l'intermédiaire de la bouche de départ 83 de fluide réfrigérant 6 à basse pression que comprend l'organe de détente 8. La bouche de départ 83 étant en communication fluidique avec le deuxième orifice d'entrée 72a, le fluide réfrigérant 6 s'écoule à l'intérieur du deuxième canal 72 jusqu'au deuxième orifice de sortie 72b.

On note que la bouche d'arrivée 82 est une bouche tangentielle de l'organe de détente 8 par rapport à un quatrième axe d'extension A4 de l'embout 81, le quatrième axe d'extension A4 étant préférentiellement confondu avec le premier axe d'extension A1. On note également que la bouche de départ 83 est coaxiale au quatrième axe d'extension A4 de l'embout 81. On note également que le premier orifice d'entrée 71a et le deuxième orifice de sortie 72b sont ménagés sur une première face 73 du bloc de fixation 7 qui est prévu pour être brasée avec la plaque d'extrémité 30 de l'échangeur thermique 3. On note encore que le bloc de fixation 7 comprend une deuxième face 74, opposée à la première face 73, et préférentiellement parallèle à la première face 73 à travers laquelle la chambre 70 débouche.

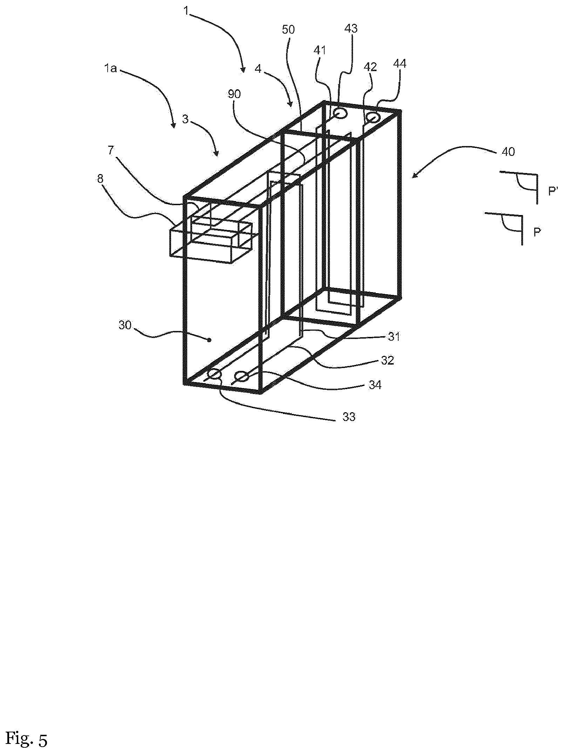

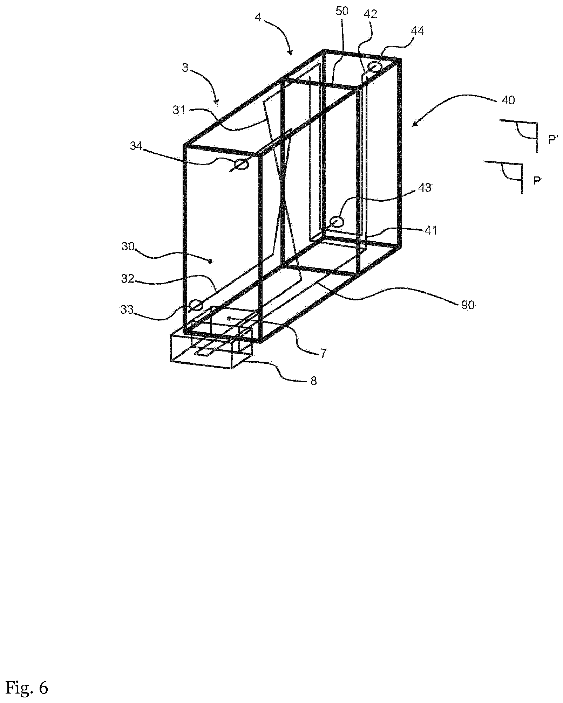

Sur les figures 5 et 6, le premier chemin de circulation 41 du fluide réfrigérant 6 et le deuxième chemin de circulation 42 du fluide réfrigérant 6 à l'intérieur de l'échangeur de chaleur interne 4 sont agencés en U, à l'intérieur d'un plan de circulation P qui est parallèle à un plan de plaque P' dans lequel s'étendent indifféremment la plaque d'extrémité 30 de l'échangeur thermique 3, la joue d'extrémité 40 de l'échangeur de chaleur interne 4 et la plaque de séparation 50.

Sur la figure 5, la première passe 31 de fluide réfrigérant 6 à l'intérieur de l'échangeur thermique 3 et la deuxième passe 32 de liquide caloporteur 5 à l'intérieur de l'échangeur thermique 3 sont également agencés en U, à l'intérieur du plan de circulation P.

Sur la figure 6, la première passe 31 de fluide réfrigérant 6 à l'intérieur de l'échangeur thermique 3 et la deuxième passe 32 de liquide caloporteur 5 à l'intérieur de l'échangeur thermique 3 sont également agencés en I, à l'intérieur du plan de circulation P.

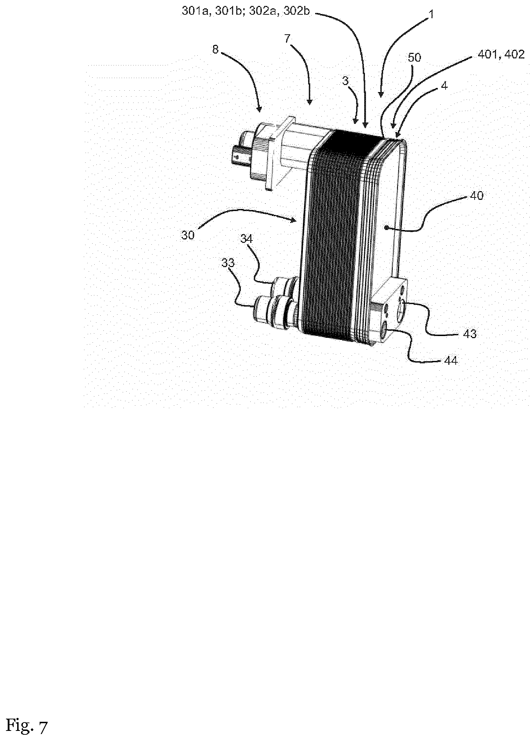

Sur la figure 7, le module de traitement thermique 1 est principalement constitué d'une pluralité de plaques 30, 301a, 301b, 302a, 302b, 40, 401, 402, 50, dont la plaque d'extrémité 30 de l'échangeur thermique 3, la joue d'extrémité 40 de l'échangeur interne 4 et la plaque de séparation 50. Parmi les plaques 30, 301a, 301b, 302a, 302b, 40, 401, 402, 50, on remarque des plaques d'échangeur 301a, 301b, 302a, 302b, 401, 402 qui sont empilées les unes sur les autres, dont des plaques d'échangeur 301a, 301b, 302a, 302b constitutives de l'échangeur thermique 3 et des plaques d'échangeurs 401, 402 constitutives de l'échangeur de chaleur interne 4.

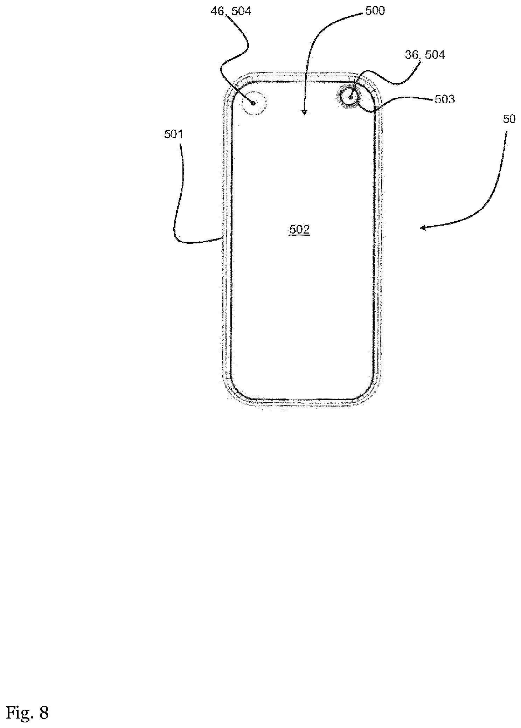

Sur les figures 8 à 14, chaque plaque 30, 301a, 301b, 302a, 302b, 40, 401, 402, 50 est agencée en une cuvette 500 délimitée par un rebord périphérique relevé 501 qui borde un fond 502. Le fond 502 des plaques d'échangeur 301a, 301b, 302a, 302b, 401, 402 et de la plaque de séparation 50 comportent une pluralité de collerettes 503, 505 qui délimitent au moins partiellement un passage 504 de liquide caloporteur 5 ou de fluide caloporteur 6. Ces passages 504 sont constitutifs de collecteur de fluide caloporteur ou de collecteur de liquide réfrigérant. Les bords périphériques relevés 501 de deux plaques successives 30, 301a, 301b, 302a, 302b, 40, 401, 402, 50 sont brasés les uns aux autres.

Sur la figure 8, la plaque de séparation 50 comporte le deuxième orifice d'évacuation 46 et le premier orifice d'évacuation 36.

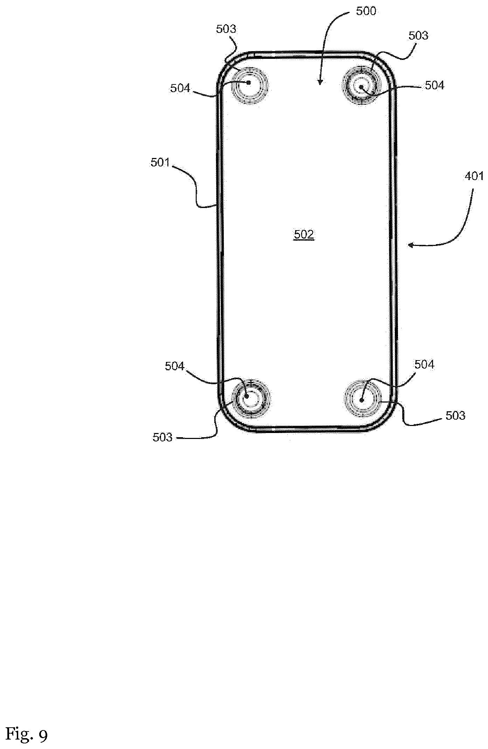

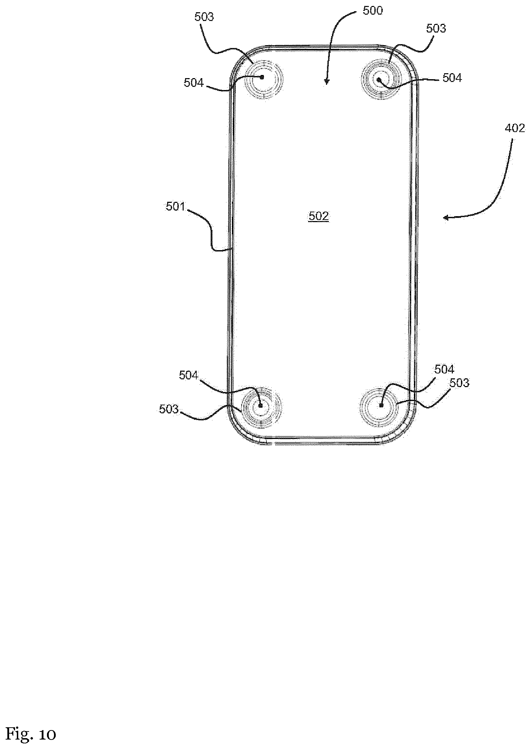

Sur la figure 9, une plaque d'échangeur de chaleur interne de premier type 401 constitutive de l'échangeur de chaleur interne 4 est prévue pour être interposée entre deux plaques d'échangeur de chaleur interne de deuxième type 402, illustrée sur la figure 10, et également constitutives de l'échangeur de chaleur interne 4. De même, une plaque d'échangeur de chaleur interne de deuxième type 402 constitutive de l'échangeur de chaleur interne 4 est prévue pour être interposée entre deux plaques d'échangeur de chaleur interne de premier type 401. Ces plaques d'échangeur de chaleur interne 401, 402 délimitent deux à deux les chemins de circulations 41, 42 du fluide réfrigérant 6 à l'intérieur de l'échangeur de chaleur interne 4. Elles diffèrent l'une de l'autre notamment par la conformation des collerettes 503 délimitant les passages 504.

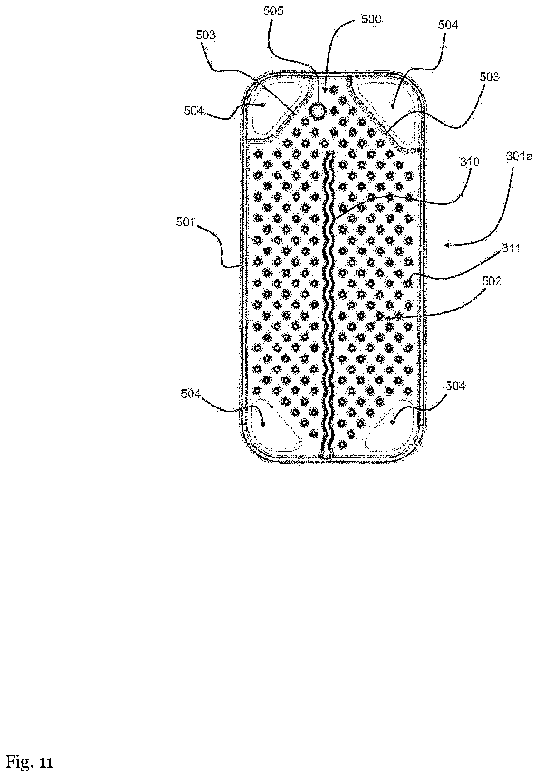

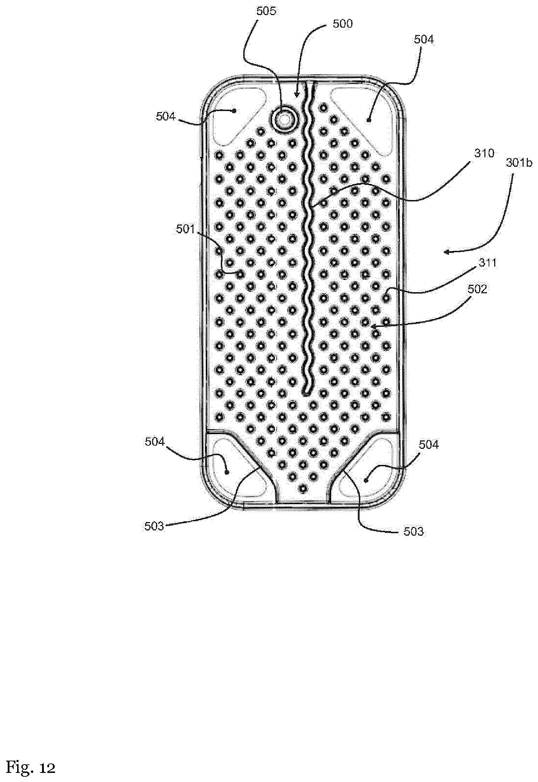

Sur la figure 11, une plaque d'échangeur thermique de premier type 301a constitutive de l'échangeur thermique 3 est prévue pour être interposée entre deux plaques d'échangeur thermique de deuxième type 301b, illustrée sur la figure 12, et également constitutives de l'échangeur thermique 3. De même, une plaque d'échangeur thermique de deuxième type 301b constitutive de l'échangeur thermique 3 est prévue pour être interposée entre deux plaques d'échangeur thermique de premier type 301a. Ces plaques d'échangeur thermique 301a, 301b délimitent deux à deux les passes 31, 32 du fluide réfrigérant 6 ou du liquide caloporteur 5à l'intérieur de l'échangeur thermique 3. Sur les figures 11 et 12, des collerettes d'amenée 505 issues de matière du fond 502 de ces plaques sont constitutives du moyen d'amenée 90 qui est réalisé par un empilement jointif des collerettes d'amenée 505 des plaques successives.

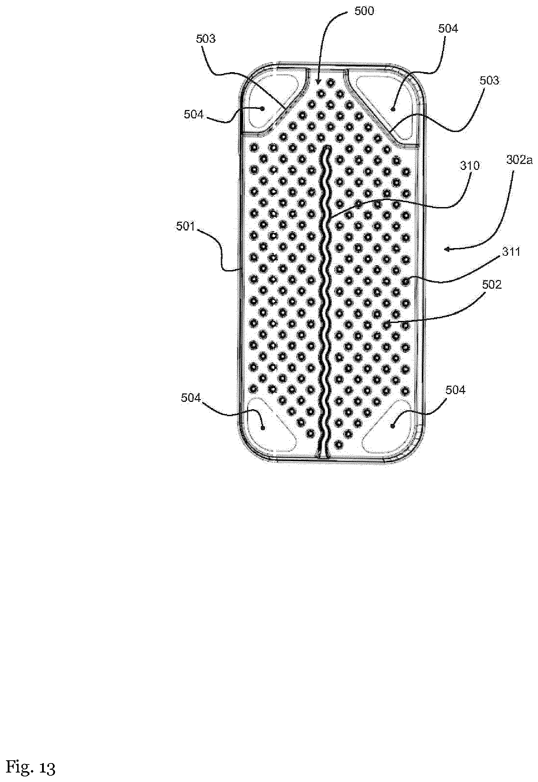

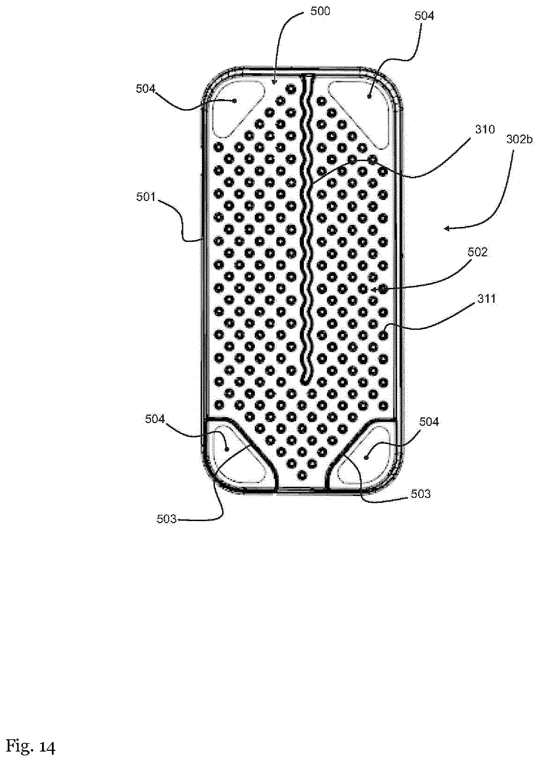

Sur la figure 13, une plaque d'échangeur thermique de troisième type 302a constitutive de l'échangeur thermique 3 est prévue pour être interposée entre deux plaques d'échangeur thermique de quatrième type 302b, illustrée sur la figure 14, et également constitutives de l'échangeur thermique 3. De même, une plaque d'échangeur thermique de quatrième type 302b constitutive de l'échangeur thermique 3 est prévue pour être interposée entre deux plaques d'échangeur thermique de troisième type 302a. Ces plaques d'échangeur thermique 302a, 302b délimitent deux à deux les passes 31, 32 du fluide réfrigérant 6 ou du liquide caloporteur 5à l'intérieur de l'échangeur thermique 3. Sur les figures 13 et 14, le fond des plaques est exempt de collerettes d'amenée, le moyen d'amenée 90 étant constitué du tube, non représenté sur ces figures, qui s'étend à l'intérieur de l'un des passages 504, et notamment à l'intérieur du passage situé dans l'angle de la plaque en haut à droite, qui est d'une surface supérieure aux surfaces des autres passages 504 de la même plaque.

On note la présence d'une rainure centrale 310 ménagée dans le fond 102 des plaques d'échangeur thermique 301a, 301b, 302a, 302b pour conformer en U les passes 31, 32. On note également la présence de perturbateurs d'écoulement 311 qui sont selon la variante illustrée formés de bossages ménagés dans le fond 102 des plaques d'échangeur thermique 301a, 301b, 302a, 302b pour perturber l'écoulement du fluide réfrigérant 6 ou du liquide caloporteur et améliorer un échange de chaleur entre ces derniers. Selon une autre variante de réalisation, les perturbateurs d'écoulement 311 sont formés d'ailettes internes interposées entre deux plaques d'échangeur thermique 301a, 301b, 302a, 302b contiguës.

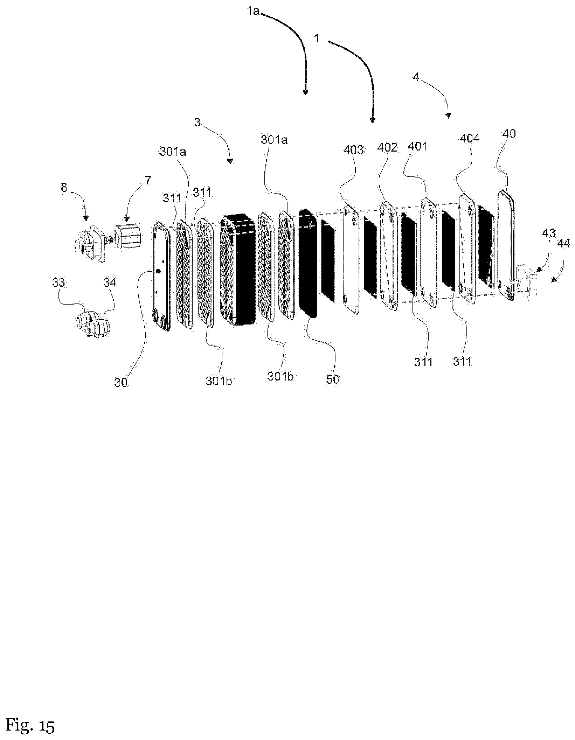

Sur la figure 15, le dispositif de traitement thermique 1a est représenté en une vue éclatée sur laquelle on distingue l'organe de détente 8 prévu pour être rapporté sur le bloc de fixation 7 qui est lui-même destiné à être basé sur la plaque d'extrémité 30 de l'échangeur thermique 3. L'échangeur thermique 3 s'étend entre la plaque d'extrémité 30 et la plaque de séparation 50 entre lesquelles on observe une alternance soit de plaques d'échangeur thermique de premier type 301a et de plaques d'échangeur thermique de deuxième type 301b, soit de plaques d'échangeur thermique de troisième type 302a et de plaques d'échangeur thermique de quatrième type 302b. L'échangeur de chaleur interne 4 s'étend entre la plaque de séparation 50 et la joue d'extrémité 40 de l'échangeur de chaleur interne 4 entre lesquelles on observe une alternance de plaques d'échangeur de chaleur interne de premier type 401 et de plaques d'échangeur de chaleur interne de deuxième type 402. Entre une plaque d'échangeur de chaleur interne de premier type 401 et une plaque d'échangeur de chaleur interne de deuxième type 402 sont interposées des perturbateurs d'écoulement 311 formées d'ailettes internes. Selon une autre variante, les perturbateurs d'écoulement 311 sont susceptibles d'être formées de bossages réalisées dans le fond 502 des plaques d'échangeur de chaleur interne de premier type 401 et/ou des plaque d'échangeur de chaleur interne de deuxième type 402. On remarque qu'une plaque d'échangeur de chaleur interne de troisième type 403 est interposée entre ladite alternance de plaques d'échangeur de chaleur 401, 402 et la plaque de séparation 50, la plaque d'échangeur de chaleur interne de troisième type 403 différant desdites plaques d'échangeur de chaleur 401, 402 par l'absence de l'une des quatre collerettes 503 pour obturer un des passages 504 et ainsi fermer le deuxième chemin de circulation 42. De même, une plaque d'échangeur de chaleur interne de quatrième type 404 est interposée entre ladite alternance de plaques d'échangeur de chaleur 401, 402 et la joue d'extrémité 40, la plaque d'échangeur de chaleur interne de quatrième type 404 différant desdites plaques d'échangeur de chaleur 401, 402 par l'absence de l'une des quatre collerettes 503 pour obturer un des passages 504 et ainsi fermer le premier chemin de circulation 41.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un module de traitement thermique regroupant un échangeur thermique, un échangeur de chaleur interne et au moins un bloc de fixation destiné à porter un organe de détente. Des variantes non décrites ici pourraient être mises en œuvre sans sortir du contexte de l'invention, dès lors que, conformément à l'invention, elles comprennent un module de traitement thermique conforme à l'invention.

## Revendications

1. Module de traitement thermique (1) pour système de traitement thermique (2) d'un véhicule, comprenant un échangeur thermique (3) et un échangeur de chaleur interne (4), l'échangeur thermique (3) étant configuré pour opérer un échange de chaleur entre un liquide caloporteur (5) et un fluide réfrigérant (6), l'échangeur de chaleur interne (4) étant configuré pour opérer un échange de chaleur entre le fluide réfrigérant (6) soumis dans le système de traitement thermique (2) à deux niveaux de température différents (T1, T2), le module de traitement thermique (1) comprenant un bloc de fixation (7) au moins solidaire de l'échangeur thermique (3) et agencé pour porter un organe de détente (8), l'échangeur thermique (3) étant intercalé entre l'échangeur de chaleur interne (4) et le bloc de fixation (7), **caractérisé en ce que** le bloc de fixation (7) comporte au moins une chambre (70) et au moins deux canaux (71, 72), dont un premier canal (71) qui s'étend entre un premier orifice d'entrée (71a) et un premier orifice de sortie (71b) qui s'ouvre sur la chambre (70), et un deuxième canal (72) qui s'étend entre un deuxième orifice d'entrée (72a) qui s'ouvre sur la chambre (70) et un deuxième orifice de sortie (72b), et **en ce que** la chambre (70) et le deuxième canal (72) sont coaxiaux et s'étendent selon un même premier axe d'extension A1, et dans lequel le premier canal (71) comprend une première portion (71c) du premier canal (71) qui est pourvu du premier orifice d'arrivée (71a) et une deuxième portion (71d) du premier canal (71) qui est pourvue du premier orifice de sortie (71b), dans lequel la première portion (71c) du premier canal (71) s'étend le long d'un deuxième axe d'extension A2, distinct du premier axe d'extension A1 et parallèle au premier axe d'extension A1, et la deuxième portion (71d) du premier canal (71) s'étend selon un troisième axe d'extension (A3) qui est sécant avec le premier axe d'extension (A1) et avec le deuxième axe d'extension (A2).

2. Module de traitement thermique (1) selon la revendication 1, **caractérisé en ce que** le premier orifice d'entrée (71a) et le deuxième orifice de sortie (72b) sont ménagés sur une première face (73) du bloc de fixation (7) qui est en contact avec une plaque d'extrémité (30) de l'échangeur thermique (3).

3. Module de traitement thermique (1) selon la revendication 2, **caractérisé en ce que** l'échangeur thermique (3) comprend un moyen d'amenée (90) du fluide réfrigérant (6) qui s'étend entre la plaque d'extrémité (30) de l'échangeur thermique (3) et une plaque de séparation (50) interposée entre l'échangeur thermique (3) et l'échangeur de chaleur interne (4).

4. Module de traitement thermique (1) selon la revendication 3, **caractérisé en ce que** le moyen d'amenée (90) comprend une bouche d'entrée (91) en correspondance fluidique avec un premier chemin de circulation (41) du fluide réfrigérant (6) à une première température (T1) que comporte l'échangeur de chaleur interne (4) et une bouche de sortie (92) en correspondance fluidique avec le premier orifice d'entrée (71a) du bloc de fixation (7).

5. Module de traitement thermique (1) selon les revendications 1 et 3, **caractérisé en ce que** l'échangeur thermique (3) comprend une première passe (31), qui est configurée pour être parcourue par le fluide réfrigérant (6) et qui s'étend entre un premier orifice d'admission (35) en communication fluidique avec le deuxième orifice de sortie (72b) du bloc de fixation (7) et un premier orifice d'évacuation (36) ménagée à travers la plaque de séparation (50), et une deuxième passe (32), qui est configurée pour être parcourue par le liquide caloporteur (5) et qui s'étend entre une bouche d'admission de liquide caloporteur (33) à l'intérieur de l'échangeur thermique (3) et une bouche d'évacuation de liquide caloporteur (34) hors de l'échangeur thermique (3).

6. Module de traitement thermique (1) selon les revendications 4 et 5, **caractérisé en ce que** l'échangeur de chaleur interne (4) comprend un deuxième chemin de circulation (42) du fluide réfrigérant (6) à une deuxième température (T2) qui est configuré pour permettre l'échange de chaleur avec le premier chemin de circulation (41) du fluide réfrigérant (6) à une première température (T1) et qui s'étend entre un deuxième orifice d'admission (45) en communication fluidique avec le premier orifice d'évacuation (36) et une bouche d'évacuation de fluide réfrigérant (44) hors de l'échangeur de chaleur interne (4), le premier chemin de circulation (41) s'étendant entre une bouche d'admission de fluide réfrigérant (43) et un deuxième orifice d'évacuation (46) en communication fluidique avec la bouche d'entrée (91) du moyen d'amenée (90).

7. Module de traitement thermique (1) selon les revendications 2, 3 et 6, comprenant une pluralité de plaques (30, 301a, 301b, 302a, 302b, 40, 401, 402, 403, 404, 50), dont la plaque d'extrémité (30) de l'échangeur thermique (3) et une joue d'extrémité (40) de l'échangeur interne (4), qui est pourvue de la bouche d'admission de fluide réfrigérant (43) et de la bouche d'évacuation de fluide réfrigérant (44), entre lesquelles sont interposées la plaque de séparation (50) et des plaques d'échangeur (301a, 301b, 302a, 302b, 401, 402, 403, 404) qui sont empilées les unes sur les autres, chaque plaque (30, 301a, 301b, 302a, 302b, 40, 401, 402, 403, 404, 50) étant agencée en une cuvette (500) délimitée par un rebord périphérique relevé (501) qui borde un fond (502), le fond (502) des plaques d'échangeur (301a, 301b, 302a, 302b, 401, 402, 403, 404) et de la plaque de séparation (50) comportant une pluralité de collerettes (503, 505) délimitant au moins partiellement un passage (504) de liquide caloporteur (5) ou de fluide caloporteur (6), les bords périphériques relevés (501) de deux plaques successives (30, 301a, 301b, 302a, 302b, 40, 401, 402, 403, 404, 50) étant brasés les uns aux autres.

8. Dispositif de traitement thermique (1a) comprenant un module de traitement thermique (1) selon l'une quelconque des revendications précédentes et un organe de détente (8) rapporté sur le bloc de fixation (7) par l'intermédiaire de moyens de fixation (75).

9. Système de traitement thermique (2) d'un véhicule comprenant un dispositif de traitement thermique (1a) selon la revendication 8, **caractérisé en ce que** le système de traitement thermique (2) comprend un circuit de liquide caloporteur (100) à l'intérieur duquel circule le liquide caloporteur (5), le circuit de liquide caloporteur (100) comportant au moins une pompe (101) et un échangeur de chaleur (103) agencé pour échanger des calories avec un dispositif de stockage d'énergie électrique (102), et **en ce que** le système de traitement thermique (2) comprend un circuit de fluide réfrigérant (200) à l'intérieur duquel circule le fluide réfrigérant (6), le circuit de fluide réfrigérant (200) comportant au moins un compresseur (201), un condenseur (202), un dispositif de détente (203) et un évaporateur (204).

## Patentansprüche

1. Thermisches Behandlungsmodul (1) für ein thermisches Behandlungssystem (2) eines Fahrzeugs, umfassend einen Wärmetauscher (3) und einen internen Wärmetauscher (4), wobei der Wärmetauscher (3) konfiguriert ist, um einen Wärmeaustausch zwischen einer Wärmeträgerflüssigkeit (5) und einem Kältemittel (6) durchzuführen, wobei der interne Wärmetauscher (4) konfiguriert ist, um einen Wärmeaustausch zwischen dem Kältemittel (6), das im thermischen Behandlungssystem (2) zwei verschiedenen Temperaturniveaus (T1, T2) ausgesetzt ist, durchzuführen, wobei das thermische Behandlungsmodul (1) einen Befestigungsblock (7) umfasst, der zumindest fest mit dem Wärmetauscher (3) verbunden ist und angeordnet ist, um ein Entspannungsorgan (8) zu tragen, wobei der Wärmetauscher (3) zwischen dem internen Wärmetauscher (4) und dem Befestigungsblock (7) angeordnet ist, **dadurch gekennzeichnet, dass** der Befestigungsblock (7) mindestens eine Kammer (70) und mindestens zwei Kanäle (71, 72) aufweist, von denen ein erster Kanal (71) sich zwischen einer ersten Einlassöffnung (71a) und einer ersten Auslassöffnung (71b), die sich zur Kammer (70) öffnet, erstreckt, und ein zweiter Kanal (72), der sich zwischen einer zweiten Einlassöffnung (72a), die sich zur Kammer (70) öffnet, und einer zweiten Auslassöffnung (72b) erstreckt, und dadurch, dass die Kammer (70) und der zweite Kanal (72) koaxial sind und sich entlang einer gleichen ersten Erstreckungsachse A1 erstrecken, und wobei der erste Kanal (71) einen ersten Abschnitt (71c) des ersten Kanals (71), der mit der ersten Einlassöffnung (71a) versehen ist, und einen zweiten Abschnitt (71d) des ersten Kanals (71), der mit der ersten Auslassöffnung (71b) versehen ist, umfasst, wobei der erste Abschnitt (71c) des ersten Kanals (71) sich entlang einer zweiten Erstreckungsachse A2 erstreckt, die von der ersten Erstreckungsachse A1 verschieden und parallel zur ersten Erstreckungsachse A1 ist, und der zweite Abschnitt (71d) des ersten Kanals (71) sich entlang einer dritten Erstreckungsachse (A3) erstreckt, die die erste Erstreckungsachse (A1) und die zweite Erstreckungsachse (A2) schneidet.

2. Thermisches Behandlungsmodul (1) nach Anspruch 1, **dadurch gekennzeichnet, dass** die erste Einlassöffnung (71a) und die zweite Auslassöffnung (72b) in einer ersten Fläche (73) des Befestigungsblocks (7) ausgebildet sind, die in Kontakt mit einer Endplatte (30) des Wärmetauschers (3) steht.

3. Thermisches Behandlungsmodul (1) nach Anspruch 2, **dadurch gekennzeichnet, dass** der Wärmetauscher (3) ein Zuführmittel (90) für das Kältemittel (6) umfasst, das sich zwischen der Endplatte (30) des Wärmetauschers (3) und einer Trennplatte (50), die zwischen dem Wärmetauscher (3) und dem internen Wärmetauscher (4) angeordnet ist, erstreckt.

4. Thermisches Behandlungsmodul (1) nach Anspruch 3, **dadurch gekennzeichnet, dass** das Zuführmittel (90) eine Einlassöffnung (91) in fluidischer Verbindung mit einem ersten Zirkulationsweg (41) des Kältemittels (6) bei einer ersten Temperatur (T1), den der interne Wärmetauscher (4) aufweist, und eine Auslassöffnung (92) in fluidischer Verbindung mit der ersten Einlassöffnung (71a) des Befestigungsblocks (7) umfasst.

5. Thermisches Behandlungsmodul (1) nach den Ansprüchen 1 und 3, **dadurch gekennzeichnet, dass** der Wärmetauscher (3) einen ersten Durchgang (31), der konfiguriert ist, um vom Kältemittel (6) durchlaufen zu werden und der sich zwischen einer ersten Einlassöffnung (35) in fluidischer Verbindung mit der zweiten Auslassöffnung (72b) des Befestigungsblocks (7) und einer ersten Auslassöffnung (36), die durch die Trennplatte (50) ausgebildet ist, erstreckt, und einen zweiten Durchgang (32) umfasst, der konfiguriert ist, um von der Wärmeträgerflüssigkeit (5) durchlaufen zu werden und der sich zwischen einer Einlassöffnung für die Wärmeträgerflüssigkeit (33) im Inneren des Wärmetauschers (3) und einer Auslassöffnung für die Wärmeträgerflüssigkeit (34) aus dem Wärmetauscher (3) heraus erstreckt.

6. Thermisches Behandlungsmodul (1) nach den Ansprüchen 4 und 5, **dadurch gekennzeichnet, dass** der interne Wärmetauscher (4) einen zweiten Zirkulationsweg (42) des Kältemittels (6) bei einer zweiten Temperatur (T2) umfasst, der konfiguriert ist, um den Wärmeaustausch mit dem ersten Zirkulationsweg (41) des Kältemittels (6) bei einer ersten Temperatur (T1) zu ermöglichen und der sich zwischen einer zweiten Einlassöffnung (45) in fluidischer Verbindung mit der ersten Auslassöffnung (36) und einer Auslassöffnung für das Kältemittel (44) aus dem internen Wärmetauscher (4) heraus erstreckt, wobei der erste Zirkulationsweg (41) sich zwischen einer Einlassöffnung für das Kältemittel (43) und einer zweiten Auslassöffnung (46) in fluidischer Verbindung mit der Einlassöffnung (91) des Zuführmittels (90) erstreckt.

7. Thermisches Behandlungsmodul (1) nach den Ansprüchen 2, 3 und 6, umfassend eine Vielzahl von Platten (30, 301a, 301b, 302a, 302b, 40, 401, 402, 403, 404, 50), darunter die Endplatte (30) des Wärmetauschers (3) und eine Endwange (40) des internen Wärmetauschers (4), die mit der Einlassöffnung für das Kältemittel (43) und der Auslassöffnung für das Kältemittel (44) versehen ist, zwischen denen die Trennplatte (50) und Wärmetauscherplatten (301a, 301b, 302a, 302b, 401, 402, 403, 404) angeordnet sind, die aufeinander gestapelt sind, wobei jede Platte (30, 301a, 301b, 302a, 302b, 40, 401, 402, 403, 404, 50) als eine Wanne (500) angeordnet ist, die durch einen erhöhten Umfangsrand (501) begrenzt wird, der einen Boden (502) umgibt, wobei der Boden (502) der Wärmetauscherplatten (301a, 301b, 302a, 302b, 401, 402, 403, 404) und der Trennplatte (50) eine Vielzahl von Kragen (503, 505) aufweist, die zumindest teilweise einen Durchgang (504) für die Wärmeträgerflüssigkeit (5) oder das Kältemittel (6) begrenzen, wobei die erhöhten Umfangsränder (501) von zwei aufeinanderfolgenden Platten (30, 301a, 301b, 302a, 302b, 40, 401, 402, 403, 404, 50) aneinander gelötet sind.

8. Thermische Behandlungsvorrichtung (1a), umfassend ein thermisches Behandlungsmodul (1) nach einem der vorhergehenden Ansprüche und ein Entspannungsorgan (8), das mittels Befestigungsmitteln (75) am Befestigungsblock (7) angebracht ist.

9. Thermisches Behandlungssystem (2) eines Fahrzeugs, umfassend eine thermische Behandlungsvorrichtung (1a) nach Anspruch 8, **dadurch gekennzeichnet, dass** das thermische Behandlungssystem (2) einen Wärmeträgerflüssigkeitskreislauf (100) umfasst, in dem die Wärmeträgerflüssigkeit (5) zirkuliert, wobei der Wärmeträgerflüssigkeitskreislauf (100) mindestens eine Pumpe (101) und einen Wärmetauscher (103) aufweist, der angeordnet ist, um Kalorien mit einer elektrischen Energiespeichervorrichtung (102) auszutauschen, und dadurch, dass das thermische Behandlungssystem (2) einen Kältemittelkreislauf (200) umfasst, in dem das Kältemittel (6) zirkuliert, wobei der Kältemittelkreislauf (200) mindestens einen Kompressor (201), einen Kondensator (202), eine Entspannungsvorrichtung (203) und einen Verdampfer (204) aufweist.

## Claims

1. Thermal treatment module (1) for a thermal treatment system (2) of a vehicle, comprising a heat exchanger (3) and an internal heat exchanger (4), the heat exchanger (3) being configured to perform heat exchange between a heat transfer liquid (5) and a refrigerant fluid (6), the internal heat exchanger (4) being configured to perform heat exchange between the refrigerant fluid (6) subjected in the thermal treatment system (2) to two different temperature levels (T1, T2), the thermal treatment module (1) comprising a mounting block (7) at least integral with the heat exchanger (3) and arranged to support an expansion device (8), the heat exchanger (3) being interposed between the internal heat exchanger (4) and the mounting block (7) **characterized in that** the mounting block (7) includes at least one chamber (70) and at least two channels (71, 72), including a first channel (71) that extends between a first inlet orifice (71a) and a first outlet orifice (71b) that opens into the chamber (70), and a second channel (72) that extends between a second inlet orifice (72a) that opens into the chamber (70) and a second outlet orifice (72b), and **in that** the chamber (70) and the second channel (72) are coaxial and extend along the same first extension axis A1, and wherein the first channel (71) comprises a first portion (71c) of the first channel (71) which is provided with the first inlet orifice (71a) and a second portion (71d) of the first channel (71) which is provided with the first outlet orifice (71b), wherein the first portion (71c) of the first channel (71) extends along a second extension axis A2, distinct from the first extension axis A1 and parallel to the first extension axis A1, and the second portion (71d) of the first channel (71) extends along a third extension axis (A3) which intersects with the first extension axis (A1) and with the second extension axis (A2).

2. Thermal treatment module (1) according to claim 1, **characterized in that** the first inlet orifice (71a) and the second outlet orifice (72b) are provided on a first face (73) of the mounting block (7) which is in contact with an end plate (30) of the heat exchanger (3).

3. Thermal treatment module (1) according to claim 2, **characterized in that** the heat exchanger (3) comprises a delivery means (90) for the refrigerant fluid (6) that extends between the end plate (30) of the heat exchanger (3) and a separation plate (50) interposed between the heat exchanger (3) and the internal heat exchanger (4).

4. Thermal treatment module (1) according to claim 3, **characterized in that** the delivery means (90) comprises an inlet port (91) in fluid correspondence with a first circulation path (41) of the refrigerant fluid (6) at a first temperature (T1) included in the internal heat exchanger (4) and an outlet port (92) in fluid correspondence with the first inlet orifice (71a) of the mounting block (7).

5. Thermal treatment module (1) according to claims 1 and 3, **characterized in that** the heat exchanger (3) comprises a first pass (31), which is configured to be traversed by the refrigerant fluid (6) and which extends between a first admission orifice (35) in fluid communication with the second outlet orifice (72b) of the mounting block (7) and a first evacuation orifice (36) provided through the separation plate (50), and a second pass (32), which is configured to be traversed by the heat transfer liquid (5) and which extends between an admission port for heat transfer liquid (33) inside the heat exchanger (3) and an evacuation port for heat transfer liquid (34) out of the heat exchanger (3).

6. Thermal treatment module (1) according to claims 4 and 5, **characterized in that** the internal heat exchanger (4) comprises a second circulation path (42) of the refrigerant fluid (6) at a second temperature (T2) which is configured to allow heat exchange with the first circulation path (41) of the refrigerant fluid (6) at a first temperature (T1) and which extends between a second admission orifice (45) in fluid communication with the first evacuation orifice (36) and a refrigerant fluid evacuation port (44) out of the internal heat exchanger (4), the first circulation path (41) extending between a refrigerant fluid admission port (43) and a second evacuation orifice (46) in fluid communication with the inlet port (91) of the delivery means (90).

7. Thermal treatment module (1) according to claims 2, 3 and 6, comprising a plurality of plates (30, 301a, 301b, 302a, 302b, 40, 401, 402, 403, 404, 50), including the end plate (30) of the heat exchanger (3) and an end cheek (40) of the internal exchanger (4), which is provided with the refrigerant fluid admission port (43) and the refrigerant fluid evacuation port (44), between which are interposed the separation plate (50) and exchanger plates (301a, 301b, 302a, 302b, 401, 402, 403, 404) which are stacked on top of each other, each plate (30, 301a, 301b, 302a, 302b, 40, 401, 402, 403, 404, 50) being arranged as a basin (500) delimited by a raised peripheral edge (501) that borders a bottom (502), the bottom (502) of the exchanger plates (301a, 301b, 302a, 302b, 401, 402, 403, 404) and of the separation plate (50) comprising a plurality of collars (503, 505) at least partially delimiting a passage (504) for heat transfer liquid (5) or heat transfer fluid (6), the raised peripheral edges (501) of two successive plates (30, 301a, 301b, 302a, 302b, 40, 401, 402, 403, 404, 50) being brazed to each other.

8. Thermal treatment device (1a) comprising a thermal treatment module (1) according to any one of the preceding claims and an expansion device (8) attached to the mounting block (7) by means of fastening means (75).

9. Thermal treatment system (2) of a vehicle comprising a thermal treatment device (1a) according to claim 8, **characterized in that** the thermal treatment system (2) comprises a heat transfer liquid circuit (100) inside which the heat transfer liquid (5) circulates, the heat transfer liquid circuit (100) including at least one pump (101) and a heat exchanger (103) arranged to exchange calories with an electrical energy storage device (102), and **in that** the thermal treatment system (2) comprises a refrigerant fluid circuit (200) inside which the refrigerant fluid (6) circulates, the refrigerant fluid circuit (200) including at least one compressor (201), a condenser (202), an expansion device (203) and an evaporator (204).
